# EUROPÄISCHE PATENTSCHRIFT

(11) **EP 2 695 409 B1**
(45) Veröffentlichungstag und Bekanntmachung des Hinweises auf die Patenterteilung: **12.08.2015**
(21) Anmeldenummer: 12717049.6
(22) Anmeldetag: 04.04.2012
(51) Int. Cl.: H04W 8/18, H04W 4/00

(54) **VERFAHREN UND SYSTEM ZUM BETREIBEN EINES M2M-MODULS IN EINER NETZWERKUMGEBUNG**
METHOD AND SYSTEM FOR OPERATING AN M2M MODULE IN A NETWORK ENVIRONMENT
PROCÉDÉ ET SYSTÈME POUR FAIRE FONCTIONNER UN MODULE M2M DANS UN ENVIRONNEMENT RÉSEAU

(30) Priorität: 07.04.2011 DE 102011016307
(43) Veröffentlichungstag der Anmeldung: 12.02.2014
(73) Patentinhaber: Giesecke & Devrient GmbH, 81677 München (DE)
(72) Erfinder: SCHUSTER, Helmut, 87660 Irsee (DE)
(86) Internationale Anmeldenummer: PCT/EP2012/001494
(87) Internationale Veröffentlichungsnummer: WO 2012/136362

(56) Entgegenhaltungen:
- US-A1- 2008 153 521
- "3rd Generation Partnership Project; Technical Specification Group Services and System Aspects; Feasibility study on the security aspects of remote provisioning and change of subscription for Machine to Machine (M2M) equipment (Release 9)", 3GPP STANDARD; 3GPP TR 33.812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V9.2.0, 22. Juni 2010 (2010-06-22), Seiten 1-87, XP050441986, [gefunden am 2010-06-22]
- "Machine-to-Machine communications (M2M); Functional architecture", ETSI DRAFT; 00002V062, EUROPEAN TELECOMMUNICATIONS STANDARDS INSTITUTE (ETSI), 650, ROUTE DES LUCIOLES ; F-06921 SOPHIA-ANTIPOLIS ; FRANCE, Nr. V0.6.2, 14. Oktober 2010 (2010-10-14), Seiten 1-116, XP014062925, [gefunden am 2010-10-14]
- "3rd Generation Partnership Project; Technical Specification Group Services and System Aspects; Study on Facilitating Machine to Machine Communication in 3GPP Systems; (Release 7)", 3GPP STANDARD; 3GPP TR 22.868, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V2.0.1, 1. Januar 2007 (2007-01-01), Seiten 1-15, XP050361380,

## Beschreibung

Die Erfindung betrifft ein Verfahren und ein System zum Betreiben eines M2M-Moduls in einer Netzwerkumgebung, wobei das M2M-Modul in einem Gerät zu dessen Betrieb vorgesehen ist.

M2M-Module dienen einer Maschine-zu-Maschine (machine-to-machine) - Kommunikation, d.h. einer Kommunikation untereinander. M2M-Module kommunizieren dabei insbesondere über Mobilfunknetzwerke. Derzeit eingesetzte M2M-Module benutzen einen Datenträger, z.B. eine SIM-Karte, um sich mit dem Mobilfunknetzwerk zu verbinden. Diese Datenträger sind entweder fest in dem M2M-Modul integriert oder können in einen entsprechenden Schacht oder Schlitz des Moduls eingesteckt werden. Das Einstecken kann durch den Hersteller eines Geräts, zu dessen Betrieb das M2M-Modul benötigt wird, vorgenommen werden. Ebenso kann das Einstecken des Datenträgers in das M2M-Modul durch einen Benutzer (Endkunden) des das M2M-Modul aufweisenden Geräts erfolgen.

In der US 2008/0153521 A1 ist ein System zur M2M-Kommunikation offenbart. Ein Mobiltelefon und eine M2M-Applikation korrespondieren in einem Netzwerk anhand einer SMS über einen Client mit einem M2M-Gerät. Dabei ist das SMS-Protokoll derart abgeändert, dass keine Quellen- und Zieltelefonnummern enthalten sind. Eine Nachrichtenweiterleitung erfolgt anhand einer Identifikationsnummer des M2M-Geräts, einer Codierung der örtlichen Zugehörigkeit zur Auswahl der Vermittlungsstation und einer Kurz-Codierung des Mobiltelefons oder der M2M-Applikation.

Aus der Studie "3rd Generation Partnership Project; Technical Specification Group Services and System Aspects; Feasibility study on the security aspects of remote provisioning and change of subscription for Machine to Machine (M2M) equipment (release 9)", 3GPP Standard; 3GPP TR 33.812 3RDGeneration Partnership Project (3GPP, Mobile Competence Centre V. 9.2.0 vom 22.06.2010 sind Sicherheitsrisiken bekannt. Eine Identifikationsnummer eines M2M-Geräts wird in einer gesicherten Umgebung vom Netzwerk zugeteilt.

Aus dem Dokument "Machine-to-Machine communications (M2M); Functional architecture" ETSI TS 102 690 V. 0.6.2 wird eine Netzwerkarchitektur einer M2M-Kommunikation und der funktionale Zusammenhang zwischen den Teilbereichen und M2M-Geräten bekannt.

Weiterhin beschreibt die Veröffentlichung "3rd Generation Partnership Project; Technical Specificadon Group Services and System Aspects; Study on Facilitating Machine to Machine Communication in 3GPP Systems" 3 GPP TR 22.868 V. 2.0.1 Möglichkeiten zum Einsatz einer M2M-Kommunikation, insbesondere eines Machine-Network- und Subscriptions-Managmenets.

Eine SIM-Karte umfasst eine Vielzahl an Leistungsmerkmalen, welche durch Mobilfunkendgeräte sinnvoll genutzt werden können, für ein M2M-Modul jedoch überflüssig sind. Für ein M2M-Modul ist lediglich die Verbindung zu dem Kommunikationsnetzwerk von Belang. Hierdurch, aber auch durch die notwendige Logistik zur Integration des Datenträgers in dem M2M-Modul, ist ein hoher und kostenintensiver Administrationsaufwand erforderlich. Andererseits sind die Datenträger zur Vermeidung unberechtigter Zugriffe auf das Mobilfunknetzwerk erforderlich.

Es ist Aufgabe der vorliegenden Erfindung, ein Verfahren und ein System zum Betreiben eines M2M-Moduls in einer Netzwerkumgebung anzugeben, mit welchem ein vereinfachter administrativer Aufwand und ein kostengünstigerer Einsatz des M2M-Moduls ermöglicht werden.

Diese Aufgabe wird gelöst durch ein Verfahren gemäß den Merkmalen des Patentanspruches 1, ein System gemäß den Merkmalen des Patentanspruches 11 und ein M2M-Modul gemäß den Merkmalen des Patentanspruches 13. Vorteilhafte Ausgestaltungen ergeben sich aus den abhängigen Patentansprüchen.

Die Erfindung schafft ein Verfahren zum Betreiben eines M2M-Moduls in einer Netzwerkumgebung, wobei das M2M-Modul in einem Gerät zu dessen Betrieb vorgesehen ist. Zur Registrierung des M2M-Moduls werden eine dem M2M-Modul zugeordnete Identifikationsinformation zusammen mit einer Benutzeradresse eines Benutzer durch den Benutzer an eine Registrierungsstelle übertragen. Eine das M2M-Modul betreffende Kommunikation erfolgt ausschließlich über die Registrierungsstelle, welche von dem M2M-Modul empfangene Nachrichten an die Benutzeradresse weiterleitet, und umgekehrt.

Ein erfindungsgemäßes System zum Betreiben eines M2M-Moduls in einer Netzwerkumgebung umfasst das zum Betrieb eines Geräts vorgesehene M2M-Modul sowie eine Registrierungsstelle zur Registrierung des M2M-Moduls und zur Durchführung einer das M2M-Modul betreffende Kommunikation. Der Registrierungsstelle wird eine dem M2M-Modul zugeordnete Identifikationsinformation zusammen mit einer Benutzeradresse eines Benutzers durch den Benutzer zur Verfügung gestellt. Zur Durchführung der das M2M-Modul betreffende Kommunikation ist die Registrierungsstelle dazu ausgebildet, von dem M2M-Modul empfangene Nachrichten an die Benutzeradresse weiterzuleiten, und umgekehrt. Dabei erfolgt die das M2M-Modul betreffende Kommunikation ausschließlich über die Registrierungsstelle.

Entsprechend dem erfindungsgemäßen Verfahren und System erfolgt bei der, insbesondere einmalig durchgeführten, Registrierung eine Zuordnung der Identifikationsinformation zu der Benutzeradresse, wobei die einander zugeordneten Informationen in einer nur der Registrierungsstelle zugänglichen Registrierungsdatenbank abgespeichert werden. Unter einer Registrierungsstelle im Sinne der Erfindung werden beispielsweise sowohl ein Netzbetreiber eines Kommunikationsnetzes, über das eine Kommunikation zwischen dem M2M-Modul und der Registrierungsstelle sowie eine Kommunikation zwischen der Registrierungsstelle und dem Benutzer erfolgt, als auch ein dritter Dienstleistungsanbieter verstanden, welcher die Aufgaben der Registrierungsstelle teilweise oder vollständig übernimmt. Anhand der Zuordnung von Identifikationsinformation und Benutzeradresse kann die Registrierungsstelle beim Erhalt einer Nachricht von dem M2M-Modul die Benutzeradresse ausfindig machen. Hierzu ermittelt die Registrierungsstelle bei einer von dem M2M-modul empfangenen Nachricht aus der Nachricht die Identifikationsinformation des M2M-Moduls. Anschließend ermittelt die Registrierungsstelle anhand der Identifikationsinformation die zugeordnete Benutzeradresse aus der Registrierungsdatenbank und leitet die Nachricht automatisch an die aus der Registrierungsdatenbank ermittelte Benutzeradresse weiter.

Die Erfindung schafft weiter ein M2M-Modul zum Betrieb eines Geräts, das zur Durchführung des erfindungsgemäßen Verfahrens ausgebildet ist.

Da das M2M-Modul bei einer Datenübertragung über keinerlei Empfängerinformation verfügen muss, kann eine Personalisierung und eine Endgeräteseitige Authentisierung entfallen, wodurch sich eine geringe Auslastung des Kommunikationsnetzes ergibt. Informationen über den Empfänger in dem M2M-Modul können entfallen, da die das M2M-Modul betreffende Kommunikation ausschließlich über die Registrierungsstelle erfolgt, welche anhand der Identifikationsinformation den Empfänger ausfindig macht. Hierdurch verringern sich die Kosten für ein M2M-Modul, da keine Vorpersonalisierung des M2M-Moduls erforderlich ist. Darüber hinaus ist der Diebstahl eines erfindungsgemäßen M2M-Moduls bzw. des Geräts mit dem M2M-Modul zwecklos, da das M2M-Modul weiterhin an die der Registrierungsstelle bekannte Benutzeradresse Daten übertragen würde, wodurch auch ein Auffinden des M2M-Moduls ermöglicht wird.

Es ist weiter bevorzugt, wenn das M2M-Modul auf keine Benutzeradresse zugreift und/ oder keine Benutzeradressen in einer Nachricht verarbeitet. Eine Kommunikation des M2M-Moduls mit der Außenwelt erfolgt immer unter Zwischenschaltung der Registrierungsstelle, welche die Adressermittlung und Nachrichtenweiterleitung für das M2M-Modul übernimmt. Hierdurch kann das M2M-Modul auf einfache und kostengünstige Weise bereitgestellt werden.

In einer weiteren zweckmäßigen Ausgestaltung umfasst die Identifikationsinformation einen eindeutigen Kennzeichner und optional einen die spätere Authentisierung zwischen dem M2M-Modul und der Registrierungsstelle benutzten kryptographischen Schlüssel. Der eindeutige Kennzeichner kann beispielsweise eine Zufallszahl, eine IMSI (International Mobile Subscriber Identity) oder eine Netzwerkadresse sein. Als kryptographischer Schlüssel kann ein sogenannter Pre-Shared Key verwendet werden, wie dieser beispielsweise von WLAN (Wireless Local Area Network) -Netzwerken bekannt ist. Bei einem Pre-Shared Key wird durch den Benutzer eine vorgegebene Passphrase mittels eines Hash-Algorithmus in einen endgültigen Schlüssel umgewandelt, welcher für die weitere Kommunikation oder Authentifikation verwendet wird.

In einer weiteren vorteilhaften Ausgestaltung wird die Identifikationsinformation auf einem gesonderten Informationsträger, insbesondere zusammen mit dem Gerät mit dem M2M-Modul, dem Benutzer bereitgestellt. Der Informationsträger kann beispielsweise ein Papierdokument o.ä. sein, auf dem die Identifikationsinformation für einen Menschen und/oder ein Endgerät visuell wahrnehmbar aufgebracht ist. Dieses Dokument kann dem Gerät seitens des Herstellers beigefügt werden. Alternativ oder zusätzlich kann die Identifikationsinformation in einem RFID-Tag des Informationsträgers enthalten sein, welches durch ein Endgerät des Benutzers für die Registrierung ausgelesen wird bzw. auslesbar ist. Hierdurch kann die Handhabung für einen Benutzer vereinfacht werden, da dieser die Identifikationsinformation nicht manuell für den Registrierungsprozess erfassen bzw. in ein Endgerät eingeben muss. Beispielsweise kann das Auslesen des RFID-Tags durch ein Mobilfunkendgerät des Benutzers erfolgen. Ist auf diesem eine entsprechende Applikation installiert, so kann die Identifikationsinformation automatisch für die Registrierung weiter verarbeitet werden.

Wahlweise kann die Benutzeradresse durch den Benutzer selbst oder durch die Registrierungsstelle festgelegt werden. Die Festlegung der Benutzeradresse kann beispielsweise im Zuge der Registrierung des M2M-Moduls vorgenommen werden. Die Benutzeradresse steht z.B. in einem Zusammenhang mit einem Vertrag für die Benutzung des Mobilfunknetzwerks. Wird die Benutzeradresse durch die Registrierungsstelle selbst festgelegt, so kann von dem Netzwerkbetreiber eine im Zusammenhang mit einem bereits bestehenden Mobilfunkvertrag des Benutzers bekannte Benutzeradresse verwendet werden. Dies hat zur Folge, dass die Daten aller auf einen Vertrag registrierten Geräte bzw. M2M-Module an dieselbe Benutzeradresse weitergeleitet werden. Es versteht sich von selbst, dass für die einzelnen M2M-Module eines Benutzers bei Bedarf auch mehrere und unterschiedliche Benutzeradressen festgelegt werden können.

Es ist weiterhin vorteilhaft, wenn eine Kommunikation zwischen dem M2M-Modul und einem Endgerät des Benutzers verschlüsselt erfolgt. Hierzu kann beispielsweise der in der Identifikationsinformation enthaltene Schlüssel verwendet werden. Ebenso kann ein gesonderter, in dem M2M-Modul bzw. dem Gerät enthaltener oder einbringbarer zweiter Schlüssel verwendet werden, welcher ausschließlich für die Absicherung der Kommunikation zwischen den beiden Endpunkten (M2M-Modul und Endgerät des Benutzers) dient.

Es ist zweckmäßigerweise vorgesehen, dass die Übertragung der Identifikationsinformation zusammen mit der Benutzeradresse über einen Kommunikationskanal erfolgt, welcher das M2M-Modul umgeht. Dies bedeutet, dass das M2M-Modul an der Übertragung der Benutzeradresse nicht beteiligt ist und somit auch keine Kenntnis über diese erlangt. Die Übertragung der Identifikationsinformation zusammen mit der Benutzeradresse kann durch den Benutzer beispielsweise über eine SMS (Short Message Service), eine Email, eine Webapplikation und dergleichen erfolgen.

Das M2M-Modul kann ein tragbarer Datenträger, insbesondere eine Chipkarte oder integraler Bestandteil des Geräts sein. Im letzteren Fall kann das M2M-Modul als System-On-Chip ausgebildet sein, welcher fest in dem Gerät verbaut ist.

Die Erfindung wird nachfolgend näher anhand eines Ausführungsbeispiels in der Zeichnung erläutert. Die einzige Figur zeigt in einer schematischen Darstellung den Ablauf des erfindungsgemäßen Verfahrens.

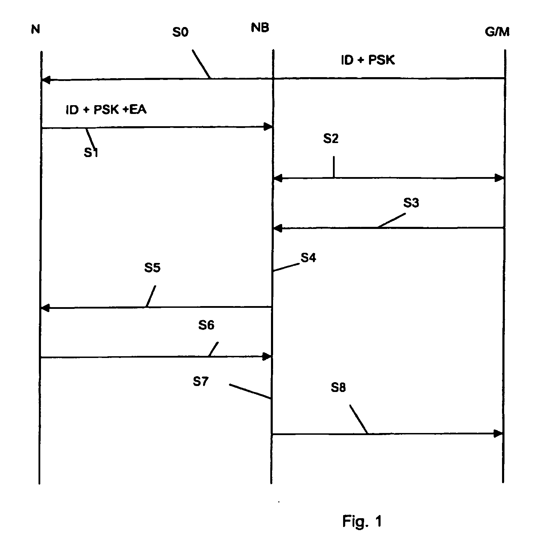

Figur 1 zeigt den Ablauf des erfindungsgemäßen Verfahrens bei der Registrierung eines M2M-Moduls M bei einer Registrierungsstelle NB sowie den Ablauf einer möglichen Kommunikation zwischen dem M2M-Modul M und einem Benutzer N.

Wenn von einer Kommunikation des M2M-Moduls M bzw. einem Gerät G, in welchem das M2M-Modul integriert ist, und dem Benutzer N die Rede ist, so versteht sich, dass die Kommunikation mit einem Endgerät des Nutzers N gemeint ist.

Das M2M-Modul M kann wahlweise in Gestalt eines tragbaren Datenträgers, insbesondere einer Chipkarte, oder als System-On-Chip integraler Bestandteil des Gerätes G sein. Ist das M2M-Modul M als tragbarer Datenträger ausgebildet, so wird dieses in einen dafür vorgesehenen Schacht oder Schlitz des Gerätes G eingesteckt. Dies kann sowohl durch den Hersteller des Geräts G als auch den Benutzer N des Gerätes geschehen. Bei dem Gerät G kann es sich um ein beliebiges Gerät handeln. In Frage kommen beispielsweise Haushaltsgeräte, Geräte der Unterhaltungselektronik usw.

Die Registrierungsstelle NB umfasst mindestens einen Rechner, der entweder unter der Kontrolle eines Netzbetreibers eines nicht näher dargestellten Kommunikationsnetzwerks oder eines dritten Dienstleistungsanbieters ist. Die Registrierungsstelle NB umfasst ferner einen Speicher für eine Registrierungsdatenbank. Die Registrierungsdatenbank ist ausschließlich durch die Registrierungsstelle NB auslesbar bzw. beschreibbar und enthält Datensätze mit einer nachfolgend näher beschriebenen Zuordnung einer Identifikationsinformation des M2M-Moduls M und einer Benutzeradresse EA des Benutzers.

Die nachfolgend beschriebene Kommunikation zwischen dem M2M-Modul M und dem Benutzer N erfolgt über das bereits erwähnte, nicht näher dargestellte Endgerät des Nutzers N. Das Endgerät kann beispielsweise ein Rechner, ein Kommunikationsendgerät, ein PDA, ein Tablet-PC usw. oder auch ein Router o.ä. sein, welcher die empfangenen Daten wiederum an ein Kommunikationsendgerät des Benutzers weiterleitet.

Das M2M-Modul M besitzt einen eindeutigen Kennzeichner ID. Der Kennzeichner ID kann beispielsweise eine Zufallszahl mit 64 Bit Länge sein. Ebenso kann der Kennzeichner eine IP-Adresse (z.B. eine IPv6-Adresse) sein. Im Hinblick auf ein Routing in dem Kommunikationsnetzwerk ist ein solcher Kennzeichner allerdings unvorteilhaft, da die IP-Adresse vorzugsweise vom Netzbetreiber des Kommunikationsnetzwerks zugewiesen wird. Im Sinne einer Rückwärtskompabilität mit einem Mobilfunknetzwerk ist es auch denkbar, dass der Kennzeichner identisch mit einer IMSI ist.

Zur Authentisierung in dem Kommunikationsnetzwerk besitzt das M2M-Modul optional einen zufälligen, symmetrischen kryptographischen Schlüssel PSK. Dieser Schlüssel PSK ist in dem M2M-Modul M vorpersonalisiert.

Der Kennzeichner ID und der Schlüssel PSK stellen eine eindeutige Identifikationsinformation für das M2M-Modul M dar und werden, z.B. im Rahmen der Herstellung des M2M-Moduls M oder des Geräts G, erzeugt. Diese werden in Schritt S0 dem Benutzer N bereitgestellt.

Der Kennzeichner ID und der optional dem M2M-Modul M zugeordnete Schlüssel PSK können dem M2M-Modul bzw. dem Gerät G in gedruckter Form beiliegen. Der Schlüssel PSK ist z.B. durch eine benutzerseitige Eingabe einer Passphrase erzeugt, die ein Hash-Algorithmus in einen endgültigen Schlüssel umwandelt. Dies ist als Pre-Shared Key bekannt. Es ist auch denkbar, den Kennzeichner ID und den Schlüssel PSK zusätzlich oder alternativ auf einem RFID-Tag und/ oder als Barcode dem Gerät beizufügen. Hierdurch braucht der Benutzer N bei der Registrierung des M2M-Moduls M keine Zahlenfolge (Kennzeichner ID und Passphrase) in sein Endgerät eingeben. Der Benutzer N kann in diesem Fall Daten mit seinem Endgerät auslesen und mittels einer entsprechenden Applikation die nachfolgend näher beschriebenen Schritte durchführen.

Um das M2M-Modul in Betrieb zu nehmen, muss dieses bei der Registrierungsstelle NB registriert werden. Hierzu werden der Registrierungsstelle durch den Benutzer N sowohl der Kennzeichner ID als auch der optionale Schlüssel PSK zusammen mit einer Benutzeradresse EA des Benutzers N übermittelt (Schritt S1).

In dem in Fig.1 dargestellten Ablauf nimmt der Benutzer N die Registrierung des M2M-Moduls M bzw. des Geräts G, welche dieses enthält, bei der Registrierungsstelle NB selbst vor. Beispielsweise fügt der Benutzer N das Gerät G bzw. dessen M2M-Modul M einem bestehenden Vertrag mit dem Betreiber des Kommunikationsnetzwerks hinzu. Der Netzbetreiber, der auch die Registrierstelle NB betreibt, hat somit die Information, welchem Benutzer N bzw. Vertrag eine das M2M-Modul M betreffende Datenkommunikation zuzuschreiben ist. Gleichzeitig erlaubt der Netzbetreiber dem entsprechenden M2M-Modul M sich in das Kommunikationsnetzwerk einzubuchen.

Im Rahmen der Registrierung erfolgt durch die Registrierungsstelle eine Zuordnung des Kennzeichners ID und des optionalen Schlüssel PSK zu der ebenfalls an die Registrierungsstelle NB übertragenen Benutzeradresse EA. Die einander zugeordneten Informationen werden in der bereits erwähnten Registrierungsdatenbank der Registrierungsstelle NB (und damit für den Netzbetreiber zugänglich) abgespeichert.

In einem alternativen, nicht dargestellten Anwendungsfall gibt der Benutzer N den Kennzeichner ID und den optionalen Schlüssel PSK zusammen mit seiner Benutzeradresse EA an einen dritten Dienstleistungsanbieter weiter. Dieser registriert nun in der Registrierungsstelle NB für den Benutzer N das M2M-Modul M auf seinen Vertrag.

Mit der Registrierung des M2M-Moduls M beim Netzbetreiber bzw. der Registrierungsstelle NB ist festgelegt, an welche Benutzeradresse (vorzugsweise eine IP-Adresse) Daten bzw. Nachrichten des M2M-Moduls M weitergeleitet werden. Die Weiterleitung geschieht ausschließlich durch den Netzbetreiber. Dies bedeutet, dass das M2M-Modul M den Empfänger der Daten bzw. Nachrichten nicht kennt. Die automatische Weiterleitung von Nachrichten des M2M-Moduls M durch die Registrierungsstelle reduziert den Konfigurationsaufwand des M2M-Moduls M. Gleichzeitig wird es Angreifern unmöglich gemacht, sich über das M2M-Modul M eines Dritten auf dessen Kosten Leistungen zu erschleichen, da es nicht möglich ist, Daten bzw. Nachrichten an einen anderen Empfänger als den bei der Registrierungsstelle hinterlegten zu senden.

Es ist möglich, dass die Benutzeradresse EA über einen bestehenden Mobilfunkvertrag mit dem Kommunikationsnetzbetreiber festgelegt ist. Dies hat zur Folge, dass die Daten bzw. Nachrichten aller auf einen Vertrag registrierten Geräte an dieselbe Benutzeradresse EA weitergeleitet werden. Ebenso ist es möglich, dass im Zuge der Registrierung des M2M-Moduls M eine von dem Benutzer N festgelegte Benutzeradresse verwendet wird. Hierdurch kann jedem auf einen Vertrag registrierten Gerät G mit einem M2M-Modul M eine individuelle Benutzeradresse für die Datenkommunikation zugeordnet werden.

Nach der Registrierung des M2M-Moduls M in den Schritten S0 und S1 kann eine Kommunikation zwischen den M2M-Modul M und dem Benutzer N erfolgen. Hierzu authentifiziert sich in einem Schritt S2 zunächst das M2M-Modul M bzw. das Gerät G mit seinem Kennzeichner ID und dem optionalen Schlüssel PSK gegenüber der Registrierungsstelle NB, und optional auch umgekehrt. Nach erfolgreicher Authentifizierung überträgt das M2M-Modul M Daten z. B. Statusangaben oder Messwerte, an die Registrierungsstelle NB (Schritt S3). In einem Schritt S4 ermittelte die Registrierungsstelle NB aus der empfangenen Nachricht den Kennzeichner ID des M2M-Moduls M. Anhand des Kennzeichners ID wird aus der Registrierungsdatenbank die zugeordnete Benutzeradresse EA ermittelt. Anschließend werden die Daten an die ermittelte Benutzeradresse EA gesendet (Schritt S5).

Möchte der Benutzer über sein Endgerät Daten an das M2M-Modul M senden (Schritt S6) so erfolgt auch diese Kommunikation über die Registrierungsstelle NB. In einem Schritt S7 wird optional überprüft, ob die Absenderadresse des Endgerätes des Benutzers einer der in der Registrierungsdatenbank hinterlegten Benutzeradressen EA entspricht. Anhand dieser kann der eindeutige Kennzeichner ID und damit das M2M-Modul M ausfindig gemacht werden. In Schritt S8 werden die Daten an das M2M-Modul M weitergeleitet.

Die Datenübertragung zwischen dem Endgerät des Benutzers N zu dem M2M-Modul M kann auch eingeschränkt sein. In diesem Fall leitet die Registrierungsstelle NB nur diejenigen Datenpakete an das M2M-Modul weiter, welche von einer vordefinierten Senderadresse stammen. In diesem Fall ist Schritt S7 obligatorisch.

Zur besseren Datensicherheit können zwischen dem Benutzer N und dem M2M-Modul M ausgetauschte Daten verschlüsselt sein. Hierzu wird zweckmäßigerweise in dem M2M-Modul ein weiterer Schlüssel vorpersonalisiert oder vom Benutzer oder Dritten festgelegt, da der Schlüssel PSK auch dem Netzbetreiber bekannt ist und dieser somit alle Daten mitlesen könnte. Mit Hilfe des zweiten Schlüssels kann eine Ende-zu-Ende-Verschlüsselung zwischen dem M2M-Modul M und dem Benutzer N vorgenommen werden.

Die Erfindung weist eine Reihe von Vorteilen auf.

In dem M2M-Modul wird keine SIM-Karte benötigt. Hierdurch kann das M2M-Modul kleiner und kostengünstiger realisiert werden.

Das M2M-Modul benötigt keinerlei Konfiguration hinsichtlich des Kennzeichners, einer Empfängeradresse, eines Schlüssels usw. Hierdurch erhöht sich der Komfort für den Benutzer. Insbesondere ist in dem M2M-Modul M kein Web-Frontend oder sonstige Benutzeroberfläche notwendig, wodurch einfachere Hardware und Software in dem Modul vorgesehen werden kann. Auch hierdurch lassen sich Kosten für die Administration und Herstellungskosten reduzieren.

Trotz der geringeren Hardware-Sicherheit des M2M-Moduls kann ein Dritter keine Leistungen erschleichen, da die von M2M-Modul gesendeten Daten in der Registrierungsstelle NB automatisch an die vordefinierte Benutzeradresse EA gesendet werden. Angriffe auf das M2M-Modul sind somit unattraktiv.

Da das M2M-Modul die Benutzeradresse EA nicht kennen muss, kann ein Angreifer diese durch einen Angriff auf das M2M-Modul auch nicht herausfinden.

Für den Netzbetreiber ergeben sich aufgrund reduzierter Logistik geringere Kosten, da kein Einkauf, keine Lagerung oder Ausgabe von SIM-Karten erforderlich ist.

Das M2M-Modul kann in kurzer Zeit in Betrieb genommen werden.

Da sich keine SIM-Karte in dem M2M-Modul befindet, werden die Kosten für Hardware sowie Logistik bzw. Einkauf beim Hersteller des M2M-Moduls reduziert.

Ist dem Betreiber der Registrierungsstelle bekannt, in welchem Gerätetyp sich das M2M-Modul M befindet, kann dieser eine zusätzliche Filterung der übertragenen Daten vornehmen, um komplexere Angriffe zu verhindern. Ein derartiger Angriff kann beispielsweise darin bestehen, dass ein Angreifer sowohl das M2M-Modul als auch den Empfänger (Benutzer) unterwandert hat.

### Bezugszeichenliste

- M: M2M (Machine to Machine)-Modul
- G: Gerät
- N: Benutzer
- NB: Registrierstelle
- ID: Kennzeichner
- PSK: Schlüssel
- EA: Benutzeradresse

- S0: Schritt
- S1: Schritt
- S2: Schritt
- S3: Schritt
- S4: Schritt
- S5: Schritt
- S6: Schritt
- S7: Schritt
- S8: Schritt

## Patentansprüche

1. Verfahren zum Betreiben eines M2M-Moduls (M) in einer Netzwerkumgebung, wobei das M2M-Modul (M) in einem Gerät (G) zu dessen Betrieb vorgesehen ist, bei dem
- zur Registrierung des M2M-Moduls (M) eine dem M2M-Modul (M) zugeordnete Identifikationsinformation (ID, PSK) und mindestens eine Benutzeradresse (EA) eines Benutzers (N) durch den Benutzer (N) oder einen Dritten zur Verfügung gestellt werden ; wobei
- eine das M2M-Modul betreffende Kommunikation ausschließlich über die Registrierungsstelle (NB) erfolgt,
**dadurch gekennzeichnet, dass**
bei der, insbesondere einmalig durchgeführten, Registrierung eine Zuordnung der Identifikationsinformation (ID, PSK) zu der Benutzeradresse (EA) und/oder die Benutzeradressen (EA) erfolgt und die einander zugeordneten Informationen in einer nur der Registrierungsstelle (NB) zugänglichen Registrierungsdatenbank abgespeichert werden;
zur Registrierung die Identifikationsinformation (ID, PSK) zusammen mit der mindestens einen Benutzeradresse (EA) an die Registrierungsstelle (NB) übertragen werden; und
die Registrierungsstelle (NB) von dem M2M-Modul empfangene Nachrichten an die Benutzeradresse (EA) und/oder die Benutzeradressen (EA) weiterleitet, und umgekehrt, wobei die Registrierungsstelle (NB) bei einer von dem M2M-Modul (M) empfangenen Nachricht aus der Nachricht die Identifikationsinformation (ID, PSK) des M2M-Moduls ermittelt, anhand der Identifikationsinformation (ID, PSK) die zugeordnete Benutzeradresse aus der Registrierungsdatenbank ermittelt und die Nachricht automatisch an die aus der Registrierungsdatenbank ermittelte Benutzeradresse (EA) und/oder die Benutzeradressen (EA) weiterleitet.

2. Verfahren nach Anspruch 1, bei dem das M2M-Modul (M) auf keine Benutzeradresse (EA) zugreift und/ oder keine Benutzeradresse (EA) in einer Nachricht verarbeitet und/oder keine Benutzeradresse (EA) enthält und/oder speichert.

3. Verfahren nach einem der vorhergehenden Ansprüche, bei dem die Identifikationsinformation (ID, PSK) einen eindeutigen Kennzeichner (ID) und optional einen für die spätere Authentisierung zwischen dem M2M-Modul (M) und der Registrierungsstelle (NB) benutzten kryptographischen Schlüssel (PSK) umfasst.

4. Verfahren nach einem der vorhergehenden Ansprüche, bei dem die Identifikationsinformation (ID, PSK) auf einem gesonderten Informationsträger, insbesondere zusammen mit dem Gerät mit dem M2M-Modul (M), dem Benutzer bereitgestellt wird.

5. Verfahren nach Anspruch 4, bei dem die Identifikationsinformation (ID, PSK) für einen Menschen und/oder ein Endgerät visuell wahrnehmbar auf den Informationsträger aufgebracht wird.

6. Verfahren nach Anspruch 4 oder 5, bei dem die Identifikationsinformation (ID, PSK) in einem RFID-Tag des Informationsträgers enthalten ist, welches durch ein Endgerät des Benutzers für die Registrierung ausgelesen wird.

7. Verfahren nach einem der vorhergehenden Ansprüche, bei dem die Benutzeradresse (EA) und/oder die Benutzeradressen (EA) durch den Benutzer (N) selbst oder durch die Registrierungsstelle (NB) festgelegt wird/werden.

8. Verfahren nach einem der vorhergehenden Ansprüche, bei dem eine Kommunikation zwischen dem M2M-Modul (M) und einem Endgerät des Benutzers (N) verschlüsselt erfolgt.

9. Verfahren nach einem der vorhergehenden Ansprüche, bei dem die Übertragung der Identifikationsinformation (ID, PSK) zusammen mit der Benutzeradresse (EA) und/oder den Benutzeradressen (EA) über einen Kommunikationskanal erfolgt, welcher das M2M-Modul (M) umgeht.

10. Verfahren nach einem der vorhergehenden Ansprüche, bei dem das M2M-Modul (M) ein tragbarer Datenträger, insbesondere eine Chipkarte, oder integraler Bestandteil des Geräts (G) ist.

11. System zum Betreiben eines M2M-Moduls (M) in einer Netzwerkumgebung, umfassend:
- das zum Betrieb eines Geräts (G) vorgesehene M2M-Modul (M);
- eine Registrierungsstelle (NB) zur Registrierung des M2M-Moduls (M), welcher eine dem M2M-Modul (M) zugeordnete Identifikationsinformation (ID, PSK) und mindestens einer Benutzeradresse (EA) eines Benutzers (N) durch den Benutzer (N) oder einen Dritten zur Verfügung gestellt werden, und zur Durchführung einer das M2M-Modul betreffende Kommunikation, wobei die das M2M-Modul betreffende Kommunikation ausschließlich über die Registrierungsstelle (NB) erfolgt,
**dadurch gekennzeichnet, dass**
- eine Registrierungsdatenbank vorgesehen ist, wobei die Registrierungsdatenbank nur der Registrierungsstelle (NB) zugänglich ist und in der Registrierungsdatenbank einander zugeordnete Informationen über eine bei der, insbesondere einmalig durchgeführten, Registrierung erfolgten Zuordnung der Identifikationsinformation (ID, PSK) zu der Benutzeradresse (EA) und/ oder die Benutzeradressen (EA) abgespeichert sind, wobei zur Registrierung des M2M-Moduls (M) die Identifikationsinformation (ID, PSK) zusammen mit der mindestens einen Benutzeradresse (EA) an die Registrierungsstelle (NB) übertragen werden;
- die Registrierungsstelle (NB) dazu ausgebildet ist, von dem M2M-Modul empfangene Nachrichten an die Benutzeradresse (EA) und/oder die Benutzeradressen (EA) weiterzuleiten, und umgekehrt, und
die Registrierungsstelle (NB) weiterhin dazu ausgebildet ist, bei einer von dem M2M-Modul (M) empfangenen Nachricht aus der Nachricht die Identifikationsinformation (ID, PSK) des M2M-Moduls (M) zu ermitteln, anhand der Identifikationsinformation (ID, PSK) die zugeordnete Benutzeradresse (EA) aus der Registrierungsdatenbank zu ermitteln und die Nachricht automatisch an die aus der Registrierungsdatenbank ermittelte Benutzeradresse (EA) und/ oder die Benutzeradressen (EA) weiterzuleiten.

12. System nach Anspruch 11, das weitere Mittel zur Durchführung eines Verfahrens gemäß einem der Ansprüche 4 bis 10 umfasst.

13. M2M-Modul (M) zum Betrieb eines Geräts (G), das dazu ausgebildet ist, ein Verfahren gemäß einem der Ansprüche 1 bis 10 auszuführen.

## Claims

1. A method for operating an M2M module (M) in a network environment, wherein the M2M module (M) is provided in a device (G) for the purpose of operating the latter, wherein
- for registering the M2M module (M) an identification information item (ID, PSK) allocated to the M2M module (M) and at least one user address (EA) of a user (N) are made available by the user (N) or a third party, wherein
- a communication relating to the M2M module is effected exclusively via the registration center (NB),
**characterized in that**
upon the registration, in particular the registration effected once, an allocation is effected of the identification information (ID, PSK) to the user address (EA) and/or the user addresses (EA), and the mutually allocated information items are stored in a registration database that is accessible only for the registration center (NB);
for registering, the identification information (ID, PSK) is transmitted to the registration center (NB) together with the at least one user address (EA); and
the registration center (NB) forwards messages received from the M2M module to the user address (EA) and/or the user addresses (EA) and vice versa, wherein
when a message is received from the M2M module (M), the registration center (NB) ascertains the identification information (ID, PSK) of the M2M module from the message, ascertains the allocated user address from the registration database by means of the identification information (ID, PSK), and automatically forwards the message to the user address (EA) and/or the user addresses (EA) ascertained from the registration database.

2. The method according to claim 1, wherein the M2M module (M) does not access a user address (EA) and/or does not process a user address (EA) in a message and/or does not contain and/or store a user address (EA).

3. The method according to any of the preceding claims, wherein the identification information (ID, PSK) comprises a unique identifier (ID) and optionally a cryptographic key (PSK) utilized for the subsequent authentication between the M2M module (M) and the registration center (NB).

4. The method according to any of the preceding claims, wherein the identification information (ID, PSK) is made available to the user on a separate information carrier, in particular together with the device having the M2M module (M).

5. The method according to claim 4, wherein the identification information (ID, PSK) is applied to the information carrier in visually perceptible form for a human and/or a terminal.

6. The method according to claim 4 or 5, wherein the identification information (ID, PSK) is contained in an RFID tag of the information carrier, which is read out by a terminal of the user for registration.

7. The method according to any of the preceding claims, wherein the user address (EA) and/or the user addresses (EA) is/ are specified by the user (N) himself or by the registration center (NB).

8. The method according to any of the preceding claims, wherein a communication between the M2M module (M) and a terminal of the user (N) is effected in encrypted fashion.

9. The method according to any of the preceding claims, wherein the transmission of the identification information (ID, PSK) is effected together with the user address (EA) and/or the user addresses (EA) via a communication channel that bypasses the M2M module (M).

10. The method according to any of the preceding claims, wherein the M2M module (M) is a portable data carrier, in particular a chip card, or an integral part of the device (G).

11. A system for operating an M2M module (M) in a network environment, comprising:
- the M2M module (M) provided for operating a device (G);
- a registration center (NB) for registering the M2M module (M), to which an identification information item (ID, PSK) allocated to the M2M module (M) and at least one user address (EA) of a user (N) are made available by the user (N) or a third party, and for effecting a communication relating to the M2M module, wherein the communication relating to the M2M module is effected exclusively via the registration center (NB),
**characterized in that**
- a registration database is provided, wherein the registration database is accessible only for the registration center (NB) and in the registration database there are stored mutually allocated information items about the allocation of the identification information (ID, PSK) to the user address (EA) and/or the user addresses (EA), said allocation having been effected upon the registration, in particular the registration carried out once, wherein for registering the M2M module (M) the identification information (ID, PSK) is transmitted to the registration center (NB) together with the at least one user address (EA);
- the registration center (NB) is configured to forward messages received from the M2M module to the user address (EA) and/or the user addresses (EA) and vice versa, and the registration center (NB) is further configured, when a message is received from the M2M module (M), to ascertain the identification information (ID, PSK) of the M2M module (M) from the message, to ascertain the allocated user address (EA) from the registration database by means of the identification information (ID, PSK), and to automatically forward the message to the user address (EA) and/or the user addresses (EA) ascertained from the registration database.

12. The system according to claim 11, which comprises further means to carry out a method according to any of the claims 4 to 10.

13. An M2M module (M) for operating a device (G), which is configured to carry out a method according to any of the claims 1 to 10.

## Revendications

1. Procédé d'exploitation d'un module M2M (M) dans un environnement réseau, le module M2M (M) étant prévu dans un appareil (G) aux fins de l'exploitation de ce dernier, dans lequel
- pour l'enregistrement du module M2M (M), une information d'identification (ID, PSK) affectée au module M2M (M) et au moins une adresse utilisateur (EA) d'un utilisateur (N) sont mises à disposition par l'utilisateur (N) ou par un tiers, cependant que
- une communication concernant le module M2M a lieu exclusivement par l'intermédiaire du registraire (NB),
**caractérisé en ce que**
lors de l'enregistrement, exécuté en particulier de façon unique, une affectation de l'information d'identification (ID, PSK) à l'adresse utilisateur (EA) et/ou aux adresses utilisateur (EA) a lieu et les informations affectées les unes aux autres sont mémorisées dans une banque de données d'enregistrement accessible uniquement au registraire (NB);
pour l'enregistrement, l'information d'identification (ID, PSK) est transmise au registraire (NB) conjointement à la au moins une adresse utilisateur (EA) ; et
le registraire (NB) transfère des messages reçus de la part du module M2M (M) à l'adresse utilisateur (EA) et/ou aux adresses utilisateur (EA), et inversement, le registraire (NB) déterminant, lors d'un message reçu de la part du module M2M (M), l'information d'identification (ID, PSK) du module M2M à partir du message, déterminant au moyen de l'information d'identification (ID, PSK) l'adresse utilisateur affectée à partir de la banque de données d'enregistrement, et transférant le message automatiquement à l'adresse utilisateur (EA) et/ou aux adresses utilisateur (EA) déterminées à partir de la banque de données d'enregistrement.

2. Procédé selon la revendication 1, dans lequel le module M2M (M) n'accède à aucune adresse utilisateur (EA) et/ou ne traite aucune adresse utilisateur (EA) dans un message et/ou ne reçoit et/ou ne mémorise aucune adresse utilisateur (EA).

3. Procédé selon une des revendications précédentes, dans lequel l'information d'identification (ID, PSK) comprend un identifiant (ID) univoque et, en option, une clé (PSK) cryptographique utilisée pour l'authentification ultérieure entre le module M2M (M) et le registraire (NB).

4. Procédé selon une des revendications précédentes, dans lequel l'information d'identification (ID, PSK) est mise à disposition de l'utilisateur sur un support d'informations distinct, en particulier conjointement à l'appareil ayant le module M2M (M).

5. Procédé selon la revendication 4, dans lequel l'information d'identification (ID, PSK) est placée sur le support d'informations de façon visuellement perceptible pour un être humain et/ou un terminal.

6. Procédé selon la revendication 4 ou 5, dans lequel l'information d'identification (ID, PSK) est contenue dans une étiquette RFID du support d'informations qui est lue par un terminal de l'utilisateur pour l'enregistrement.

7. Procédé selon une des revendications précédentes, dans lequel l'adresse utilisateur (EA) et/ou les adresses utilisateur (EA) est/sont fixée(s) par l'utilisateur (N) lui-même ou par le registraire (NB).

8. Procédé selon une des revendications précédentes, dans lequel une communication entre le module M2M (M) et un terminal de l'utilisateur (N) a lieu de façon chiffrée.

9. Procédé selon une des revendications précédentes, dans lequel la transmission de l'information d'identification (ID, PSK) a lieu conjointement à l'adresse utilisateur (EA) et/ou aux adresses utilisateur (EA) par l'intermédiaire d'un canal de communication qui contourne le module M2M (M).

10. Procédé selon une des revendications précédentes, dans lequel le module M2M (M) est un support de données portable, en particulier une carte à puce, ou fait partie intégrante de l'appareil (G).

11. Système d'exploitation d'un module M2M (M) dans un environnement réseau, comprenant :
- le module M2M (M) prévu pour l'exploitation d'un appareil (G);
- un registraire (NB) pour l'enregistrement du module M2M (M), auquel une information d'identification (ID, PSK) affectée au module M2M (M) et au moins une adresse utilisateur (EA) d'un utilisateur (N) sont mises à disposition par l'utilisateur (N) ou par un tiers, et pour l'exécution d'une communication concernant le module M2M, la communication concernant le module M2M ayant lieu exclusivement par l'intermédiaire du registraire,
**caractérisé en ce que**
- une banque de données d'enregistrement est prévue, la banque de données d'enregistrement n'étant accessible qu'uniquement au registraire (NB), et des informations affectées les unes aux autres étant mémorisées dans la banque de données d'enregistrement et concernant une affectation, ayant eu lieu lors de l'enregistrement exécuté en particulier de façon unique, de l'information d'identification (ID, PSK) à l'adresse utilisateur (EA) et/ou aux adresses utilisateur (EA), cependant que, pour l'enregistrement du module M2M (M), l'information d'identification (ID est transmise au registraire (NB), PSK) conjointement à la au moins une adresse utilisateur (EA) ;
- le registraire (NB) est conçu pour transférer des messages reçus de la part du module M2M (M) à l'adresse utilisateur (EA) et/ou aux adresses utilisateur (EA), et inversement, et le registraire (NB) étant en outre conçu pour déterminer, lors d'un message reçu de la part du module M2M (M), l'information d'identification (ID, PSK) du module M2M (M) à partir du message, pour déterminer au moyen de l'information d'identification (ID, PSK) l'adresse utilisateur affectée à partir de la banque de données d'enregistrement, et pour transférer le message automatiquement à l'adresse utilisateur (EA) et/ou aux adresses utilisateur (EA) déterminées à partir de la banque de données d'enregistrement.

12. Système selon la revendication 11, comprenant des moyens supplémentaires d'exécution d'un procédé selon une des revendications de 4 à 10.

13. Module M2M (M) destiné à l'exploitation d'un appareil (G), qui est conçu pour effectuer un procédé selon une des revendications de 1 à 10.
